# EUROPEAN PATENT APPLICATION

(11) **EP 4 325 816 A1**
(43) Date of publication of application: **21.02.2024**
(21) Application number: 22806787.2
(22) Date of filing: 11.05.2022
(51) Int. Cl.: H04L 67/50, H04L 47/70

(54) **CLOUD SERVICE DEPLOYMENT METHOD FOR CLOUD PLATFORM AND RELATED DEVICE**

(30) Priority: 12.05.2021 CN 202110517813
(71) Applicant: Huawei Cloud Computing Technologies Co., Ltd., Guizhou 550025 (CN)
(72) Inventor: JING, Tangjun, Guizhou 550025 (CN); CHEN, Fujun, Guizhou 550025 (CN)
(74) Representative: MERH-IP Matias Erny Reichl Hoffmann Patentanwälte PartG mbB
(86) International application number: PCT/CN2022/092148
(87) International publication number: WO 2022/237824

(57) **Abstract**

This application provides a cloud service deployment method of a cloud platform and a related device. When a cloud service is deployed for a tenant, impact brought by another tenant may be considered, to implement cross-tenant cloud service optimization deployment. The method of this application includes: A cloud platform provides a service feature setting interface, where the service feature setting interface is configured to obtain a supply-dependency relationship of different tenants. The cloud platform deploys, based on the supply-dependency relationship obtained by the service feature setting interface, a cloud service for a tenant serving as a dependent party or for a tenant serving as a supplier.

## Description

This application claims priority to Chinese Patent Application No. 202110517813.8, filed with the China National Intellectual Property Administration on May 12, 2021 and entitled "CLOUD SERVICE DEPLOYMENT METHOD OF CLOUD PLATFORM AND RELATED DEVICE", which is incorporated herein by reference in its entirety.

### TECHNICAL FIELD

This application relates to the field of cloud technologies, and in particular, to a cloud service deployment method of a cloud platform and a related device.

### BACKGROUND

In a cloud scenario, when a cloud platform determines that a tenant has a requirement of a cloud service, the cloud platform may directly deploy a cloud service (for example, a virtual machine, a container, and a bare metal server allocated to the tenant) for the tenant.

Generally, service cooperation usually exists between different tenants, to be specific, cloud services deployed by the cloud platform for the different tenants may interact with each other. However, when deploying a cloud service for a tenant, the cloud platform can only consider a factor of the tenant, but fails to consider impact brought by another tenant associated with the tenant. In this case, cross-tenant cloud service optimization deployment cannot be implemented.

### SUMMARY

Embodiments of this application provide a cloud service deployment method of a cloud platform and a related device. When a cloud service is deployed for a tenant, impact brought by another tenant may be considered, to implement cross-tenant cloud service optimization deployment.

A first aspect of embodiments of this application provides a cloud service deployment method of a cloud platform, and the method includes:

The cloud platform may provide a service feature setting interface, where the service feature setting interface is configured to obtain a supply-dependency relationship of different tenants. For example, a supply-dependency relationship 1 represents an association relationship between a tenant 1 serving as a supplier and a tenant 2 serving as a dependent party, a supply-dependency relationship 2 represents an association relationship between a tenant 3 serving as a supplier and a tenant 4 serving as a dependent party, and the like.

The cloud platform deploys, based on the supply-dependency relationship obtained by the service feature setting interface, a cloud service for a tenant serving as a dependent party or for a tenant serving as a supplier. It can be learned that when deploying the cloud service for a tenant, the cloud platform may obtain a supply-dependency relationship of the tenant through the service feature setting interface. Because the relationship indicates an association relationship between the tenant and another tenant, when the cloud platform deploys the cloud service for the tenant based on the relationship, if the tenant serves as the dependent party, the cloud platform may consider impact brought by the another tenant serving as the supplier, and if the tenant serves as the supplier, the cloud platform may consider impact brought by the another tenant serving as the dependent party, to implement cross-tenant cloud service optimization deployment.

The tenant may operate a terminal device locally, where a browser that can access the cloud platform or a client provided by the cloud platform is installed on the terminal device; accesses the cloud platform by using the terminal device; and logs in to the cloud platform by inputting a tenant account and a tenant password on the cloud platform. Different tenants may register on the cloud platform to obtain different tenant accounts and passwords. The cloud platform distinguishes between the tenants based on the tenant account input by the tenant and authenticates the tenant account based on the password.

Further, for the tenant serving as the dependent party and the tenant serving as the supplier in any supply-dependency relationship, the cloud platform may set the cloud service of the tenant serving as the supplier and the cloud service of the tenant serving as the dependent party in a same logical region, to implement cross-tenant cloud service affinity deployment. In this way, when the cloud service of the tenant serving as the supplier interacts with the cloud service of the tenant serving as the dependent party, data does not need to be transmitted across a logical region. This can reduce a data transmission delay and improve data transmission efficiency.

Specifically, the cross tenant cloud services can be collaboratively deployed in a same logical region. Therefore, the following advantages can be achieved: (1) A communication delay between cloud services can be reduced, achieving better experience. (2) Data transmission across an aggregation layer can be reduced. Therefore, transmission bandwidth can be guaranteed. This helps improve quality of service of big data supply and big data consumption, and optimize cooperation between a video production service product and a video processing service product. (3) A large amount of traffic can be prevented from crossing an aggregation boundary, and excessive wasted network bandwidth can be avoided, to improve network resource utilization.

In a possible implementation, the service feature setting interface is configured to: obtain a supply type of a first tenant, and obtain a supply type of a second tenant, where the supply type of the first tenant is the supplier, and the supply type of the second tenant is the dependent party. In the foregoing implementation, the first tenant and the second tenant may input the supply type of the first tenant and the second tenant in the service feature setting interface provided by the cloud platform. The supply type herein generally refers to the supplier or the dependent party. In this case, based on the supply type of the first tenant and the supply type of the second tenant, the cloud platform may determine that the first tenant serves as the supplier and determine that the second tenant serves as the dependent party.

It should be noted that the cloud platform identifies the first tenant by using a tenant account registered by the first tenant on the cloud platform, and identifies the second tenant by using a tenant account registered by the second tenant on the cloud platform.

In a possible implementation, the service feature setting interface is further configured to: obtain a supply type public range of the first tenant, and obtain a supply type public range of the second tenant, where the supply type public range of the first tenant is visible to all external tenants or visible to the second tenant, and the supply type public range of the second tenant is visible to all external tenants or visible to the first tenant. In the foregoing implementation, the first tenant and the second tenant may input the supply type public range of the first tenant and the second tenant in the service feature setting interface provided by the cloud platform. In this case, based on the supply type public range of the first tenant and the supply type public range of the second tenant, the cloud platform may set the supply type of the first tenant to be visible to all external tenants or visible to the second tenant, and set the supply type of the second tenant to be visible to all external tenants or visible to the first tenant.

In a possible implementation, the service feature setting interface is further configured to: obtain a dependent party set by the first tenant, or obtain a supplier set by the second tenant, where the dependent party set by the first tenant is the second tenant, and the supplier set by the second tenant is the first tenant. In the foregoing implementation, the first tenant may input, in the service feature setting interface provided by the cloud platform, the dependent party set by the first tenant, where the dependent party set by the first tenant is the second tenant. Therefore, the cloud platform may determine, based on the dependent party set by the first tenant, that a supply-dependency relationship exists between the first tenant and the second tenant. Alternatively, the second tenant may input, in the service feature setting interface provided by the cloud platform, the supplier set by the second tenant, where the supplier set by the second tenant is the first tenant. Therefore, the cloud platform may determine, based on the supplier set by the second tenant, that a supply-dependency relationship exists between the first tenant and the second tenant.

In a possible implementation, the service feature setting interface is further configured to: when obtaining that the dependent party set by the first tenant is the second tenant, confirm with the second tenant whether the second tenant is willing to serve as the dependent party of the first tenant, and when obtaining that the supplier set by the second tenant is the first tenant, confirm with the first tenant whether the first tenant is willing to serve as the supplier of the second tenant. In the foregoing implementation, when obtaining that the dependent party set by the first tenant is the second tenant, the cloud platform may confirm with the second tenant, through the service feature setting interface, whether the second tenant is willing to serve as the dependent party of the first tenant. If the second tenant determines to be willing to serve as the dependent party of the first tenant, the cloud platform may successfully obtain the supply-dependency relationship between the first tenant and the second tenant. Alternatively, when obtaining that the supplier set by the second tenant is the first tenant, the cloud platform may confirm with the first tenant, through the service feature setting interface, whether the first tenant is willing to serve as the supplier of the second tenant. If the first tenant determines to be willing to serve as the supplier of the second tenant, the cloud platform may successfully obtain the supply-dependency relationship between the first tenant and the second tenant.

In a possible implementation, the deploying, based on the supply-dependency relationship obtained by the service feature setting interface, a cloud service for a tenant serving as a dependent party or for a tenant serving as a supplier includes: determining an availability zone at which the cloud service of the tenant serving as the supplier is located; and setting the cloud service of the tenant serving as the dependent party in the availability zone. In the foregoing implementation, for the tenant serving as the dependent party and the tenant serving as the supplier in any supply-dependency relationship, the cloud platform may first determine the availability zone at which the cloud service of the tenant serving as the supplier is located, and set the cloud service of the tenant serving as the dependent party in the availability zone. In this way, cross-tenant cloud service affinity deployment is implemented.

In a possible implementation, the deploying, based on the supply-dependency relationship obtained by the service feature setting interface, a cloud service for a tenant serving as a dependent party or for a tenant serving as a supplier includes: determining an auto scaling policy of the cloud service of the tenant serving as the supplier; and adjusting, according to the auto scaling policy, the cloud service of the tenant serving as the dependent party. In the foregoing implementation, the cloud platform sets the auto scaling policy of the cloud service for the tenant serving as the supplier. The auto scaling policy may be specifically: For the tenant serving as the dependent party and the tenant serving as the supplier in any supply-dependency relationship, after a quantity of cloud instances of the tenant serving as the supplier changes, a quantity of cloud instances of the tenant serving as the dependent party also changes. Therefore, the cloud platform may adjust, according to the auto scaling policy, the cloud service of the tenant serving as the supplier.

In a possible implementation, the deploying, based on the supply-dependency relationship obtained by the service feature setting interface, a cloud service for a tenant serving as a dependent party or for a tenant serving as a supplier includes: determining quality of service (quality of service, QoS) or a throughput of the cloud service of the tenant serving as the supplier; and adjusting, based on the QoS or the throughput, the cloud service of the tenant serving as the dependent party. In the foregoing implementation, the cloud platform may monitor, in real time, a status parameter of the cloud service of the tenant serving as the supplier. The status parameter may be the quality of service or the throughput. The cloud platform may adjust, based on the status parameter of the cloud service of the tenant serving as the supplier, the cloud service of the tenant serving as the supplier.

In a possible implementation, the deploying, based on the supply-dependency relationship obtained by the service feature setting interface, a cloud service for a tenant serving as a supplier includes: determining an availability zone at which the cloud service of the tenant serving as the dependent party is located; and setting the cloud service of the tenant serving as the supplier in the availability zone. In the foregoing implementation, for the tenant serving as the dependent party and the tenant serving as the supplier in any supply-dependency relationship, the cloud platform may first determine the availability zone at which the cloud service of the tenant serving as the dependent party is located, and set the cloud service of the tenant serving as the supplier in the availability zone. In this way, cross-tenant cloud service affinity deployment is implemented.

In a possible implementation, the deploying, based on the supply-dependency relationship obtained by the service feature setting interface, a cloud service for a tenant serving as a supplier includes: determining an auto scaling policy of the cloud service of the tenant serving as the dependent party; and adjusting, according to the auto scaling policy, the cloud service of the tenant serving as the supplier. In the foregoing implementation, the cloud platform sets the auto scaling policy of the cloud service for the tenant serving as the dependent party. The auto scaling policy may be specifically: For the tenant serving as the dependent party and the tenant serving as the supplier in any supply-dependency relationship, after a quantity of cloud instances of the tenant serving as the dependent party changes, a quantity of cloud instances of the tenant serving as the supplier also changes. Therefore, the cloud platform may adjust, according to the auto scaling policy, the cloud service of the tenant serving as the supplier.

In a possible implementation, the deploying, based on the supply-dependency relationship obtained by the service feature setting interface, a cloud service for a tenant serving as a supplier includes: determining QoS or a throughput of the cloud service of the tenant serving as the dependent party; and adjusting, based on the QoS or the throughput, the cloud service of the tenant serving as the supplier. In the foregoing implementation, the cloud platform may monitor, in real time, a status parameter of the cloud service of the tenant serving as the dependent party. The status parameter may be the quality of service or the throughput. The cloud platform may adjust, based on the status parameter of the cloud service of the tenant serving as the dependent party, the cloud service of the tenant serving as the supplier.

A second aspect of embodiments of this application provides a cloud platform. The cloud platform includes an obtaining module, configured to provide a service feature setting interface, where the service feature setting interface is configured to obtain a supply-dependency relationship of different tenants; and a deployment module, configured to deploy, based on the supply-dependency relationship obtained by the service feature setting interface, a cloud service for a tenant serving as a dependent party or for a tenant serving as a supplier.

It can be learned from the cloud platform that the cloud platform may provide the service feature setting interface, where the service feature setting interface is configured to obtain the supply-dependency relationship of the different tenants. The cloud platform deploys, based on the supply-dependency relationship obtained by the service feature setting interface, the cloud service for the tenant serving as the dependent party or for the tenant serving as the supplier. It can be learned that when deploying the cloud service for a tenant, the cloud platform may obtain a supply-dependency relationship of the tenant through the service feature setting interface. Because the relationship indicates an association relationship between the tenant and another tenant, when the cloud platform deploys the cloud service for the tenant based on the relationship, if the tenant serves as the dependent party, the cloud platform may consider impact brought by the another tenant serving as the supplier, and if the tenant serves as the supplier, the cloud platform may consider impact brought by the another tenant serving as the dependent party, to implement cross-tenant cloud service optimization deployment.

In a possible implementation, the obtaining module is configured to: obtain, through the service feature setting interface, a supply type of a first tenant, and obtain a supply type of a second tenant, where the supply type of the first tenant is the supplier, and the supply type of the second tenant is the dependent party.

In a possible implementation, the obtaining module is further configured to: obtain, through the service feature setting interface, a supply type public range of the first tenant, and obtain a supply type public range of the second tenant, where the supply type public range of the first tenant is visible to all external tenants or visible to the second tenant, and the supply type public range of the second tenant is visible to all external tenants or visible to the first tenant.

In a possible implementation, the obtaining module is further configured to: obtain, through the service feature setting interface, a dependent party set by the first tenant, or obtain a supplier set by the second tenant, where the dependent party set by the first tenant is the second tenant, and the supplier set by the second tenant is the first tenant.

In a possible implementation, the obtaining module is further configured to: when obtaining, through the service feature setting interface, that the dependent party set by the first tenant is the second tenant, confirm with the second tenant whether the second tenant is willing to serve as the dependent party of the first tenant, and when obtaining that the supplier set by the second tenant is the first tenant, confirm with the first tenant whether the first tenant is willing to serve as the supplier of the second tenant.

In a possible implementation, the deployment module is configured to: determine an availability zone at which the cloud service of the tenant serving as the supplier is located; and set the cloud service of the tenant serving as the dependent party in the availability zone.

In a possible implementation, the deployment module is configured to: determine an auto scaling policy of the cloud service of the tenant serving as the supplier; and adjust, according to the auto scaling policy, the cloud service of the tenant serving as the dependent party.

In a possible implementation, the deployment module is configured to: determine QoS or a throughput of the cloud service of the tenant serving as the supplier; and adjust, based on the QoS or the throughput, the cloud service of the tenant serving as the dependent party.

In a possible implementation, the deployment module is configured to: determine an availability zone at which the cloud service of the tenant serving as the dependent party is located; and set the cloud service of the tenant serving as the supplier in the availability zone.

In a possible implementation, the deployment module is configured to: determine an auto scaling policy of the cloud service of the tenant serving as the dependent party; and adjust, according to the auto scaling policy, the cloud service of the tenant serving as the supplier.

In a possible implementation, the deployment module is configured to: determine QoS or a throughput of the cloud service of the tenant serving as the dependent party; and adjust, based on the QoS or the throughput, the cloud service of the tenant serving as the supplier.

A third aspect of embodiments of this application provides a network device. The network device includes a memory and a processor.

The memory stores code, the processor is configured to execute the code, and when the code is executed, the network device performs the method according to any one of the first aspect or the possible implementations of the first aspect.

A fourth aspect of embodiments of this application provides a computer storage medium. The computer storage medium stores a computer program, and when the program is executed by a computer, the computer is enabled to perform the method according to any one of the first aspect or the possible implementations of the first aspect.

A fifth aspect of embodiments of this application provides a computer program product. The computer program product stores instructions, and when the instructions are executed by a computer, the computer is enabled to perform the method according to any one of the first aspect or the possible implementations of the first aspect.

In embodiments of this application, the cloud platform may provide the service feature setting interface, where the service feature setting interface is configured to obtain the supply-dependency relationship of different tenants. The cloud platform deploys, based on the supply-dependency relationship obtained by the service feature setting interface, the cloud service for the tenant serving as the dependent party or the tenant serving as the supplier. It can be learned that when deploying the cloud service for a tenant, the cloud platform may obtain a supply-dependency relationship of the tenant through the service feature setting interface. Because the relationship indicates an association relationship between the tenant and another tenant, when the cloud platform deploys the cloud service for the tenant based on the relationship, if the tenant serves as the dependent party, the cloud platform may consider impact brought by the another tenant serving as the supplier, and if the tenant serves as the supplier, the cloud platform may consider impact brought by the another tenant serving as the dependent party, to implement cross-tenant cloud service optimization deployment.

### BRIEF DESCRIPTION OF DRAWINGS

FIG. 1 is a schematic diagram of a logical region according to an embodiment of this application;
FIG. 2 is a schematic flowchart of a cloud service deployment method of a cloud platform according to an embodiment of this application;
FIG. 3(a) is a schematic diagram of a service feature setting interface according to an embodiment of this application;
FIG. 3(b) is another schematic diagram of a service feature setting interface according to an embodiment of this application;
FIG. 3(c) is another schematic diagram of a service feature setting interface according to an embodiment of this application;
FIG. 3(d) is another schematic diagram of a service feature setting interface according to an embodiment of this application;
FIG. 4 is a schematic diagram of deploying a cloud service by a cloud platform according to an embodiment of this application;
FIG. 5 is another schematic diagram of deploying a cloud service by a cloud platform according to an embodiment of this application;
FIG. 6 is a schematic diagram of a structure of a cloud platform according to an embodiment of this application; and
FIG. 7 is a schematic diagram of a structure of a network device according to an embodiment of this application.

### DESCRIPTION OF EMBODIMENTS

Embodiments of this application provide a cloud service deployment method of a cloud platform and a related device. When a cloud service is deployed for a tenant, impact brought by another tenant may be considered, to implement cross-tenant cloud service optimization deployment.

In the specification, claims, and accompanying drawings of this application, the terms "first", "second", and the like are intended to distinguish between similar objects, but do not necessarily indicate a specific order or sequence. It should be understood that the data termed in such a way is interchangeable in proper circumstances so that embodiments described herein can be implemented in other orders than the order illustrated or described herein. In addition, terms "include" and "have" and any other variants thereof are intended to cover the non-exclusive inclusion. For example, a process, method, system, product, or device including a series of steps or modules is not necessarily limited to those steps or modules clearly listed, but may include other steps or modules that are not explicitly listed or are inherent to such a process, method, product, or device. Naming or numbering of steps in this application does not mean that the steps in the method procedures need to be performed in a time/logical order indicated by the naming or the numbering. An execution order of the steps in the procedures that have been named or numbered may be changed according to a technical objective to be achieved, as long as same or similar technical effect can be achieved. Module division in this application is logical division, and may be other division during actual implementation. For example, a plurality of modules may be combined into or integrated into another system, or some features may be ignored or not performed. In addition, the displayed or discussed mutual couplings or direct couplings or communication connections may be implemented through some interfaces. The indirect couplings or communication connections between modules may be implemented in an electronic form or other similar forms. This is not limited in this application. In addition, the modules or sub-modules described as separate components may or may not be physically separated, or may or may not be physical modules, or may be distributed in a plurality of circuit modules. Some or all of the modules may be selected based on an actual requirement to achieve the objectives of the solutions of this application.

Embodiments of this application may be applied to a cloud scenario. In this scenario, a cloud platform may deploy a cloud service for a plurality of tenants. Specifically, the cloud platform may manage cloud instances in a plurality of logical regions. For example, the cloud platform may create, release, migrate, allocate, and monitor the cloud instances in a logical region. When a tenant has a requirement of a cloud service, the cloud platform may schedule cloud instances in a logical region (or some logical regions) to provide a service for the tenant. These scheduled cloud instances may be specially used to implement the service of the tenant. Cloud service deployment of the tenant is complete.

The tenant may operate a terminal device locally, where a browser that can access the cloud platform or a client provided by the cloud platform is installed on the terminal device; accesses the cloud platform by using the terminal device; and logs in to the cloud platform by inputting a tenant account and a tenant password on the cloud platform. Different tenants may register on the cloud platform to obtain different tenant accounts and passwords. The cloud platform distinguishes between the tenants based on the tenant account input by the tenant and authenticates the tenant account based on the password.

The terminal device is, for example, a mobile phone, a notebook computer, a desktop computer, a tablet computer, or an in-vehicle host that can access Internet, or another device that can access Internet and that can be locally operated by an individual.

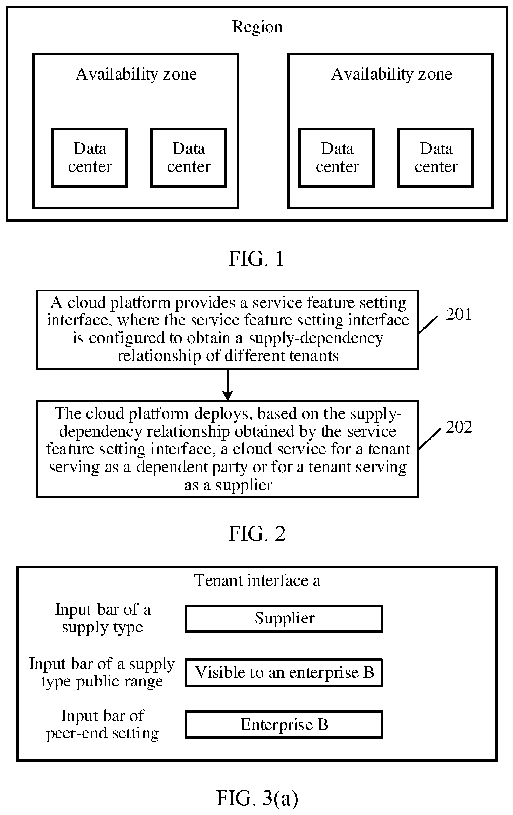

The following briefly describes a logical region in embodiments of this application. FIG. 1 is a schematic diagram of a logical region according to an embodiment of this application. As shown in FIG. 1, the logical region includes a region (region), an availability zone (availability zone, AZ), a data center (data center, DC), and the like. Generally, the region is a physical region obtained through division based on a geographical location, for example, Central China, South China, and East China. The availability zone is a smaller-granularity, independent, and physically isolated zone in the region. One region may include a plurality of availability zones. For example, South China includes a plurality of availability zones, such as a city-X zone, a city-Y zone, and a city-Z zone. One availability zone may include a plurality of data centers. Each data center may accommodate infrastructure, such as a plurality of physical servers and a plurality of communication devices. The plurality of physical servers in the data center may be used to deploy a cloud instance providing a cloud service. The cloud instance may be the physical server (or may be understood as a bare metal server, that is, a bare metal), or may be a virtual machine (virtual machine, VM), a docker (docker), or the like deployed on the physical server.

In a related technology, service cooperation usually exists between different tenants, to be specific, cloud services deployed by the cloud platform for the different tenants may interact with each other. For example, a service of an enterprise A is a database, and a service of an enterprise B is a video application dependent on the database of the enterprise A. After the cloud platform allocates a cloud instance to the enterprise A and the enterprise B, when the cloud instance allocated to the enterprise B runs the video application, video data may be obtained from the database run on the cloud instance allocated to the enterprise A, to be specific, the cloud instance allocated to the enterprise A and the cloud instance allocated to the enterprise B may interact with each other. However, when deploying a cloud service for a tenant, the cloud platform can only consider a factor of the tenant, but fails to consider impact brought by another tenant. In this case, cross-tenant cloud service optimization deployment cannot be implemented.

To resolve the foregoing problem, embodiments of this application provide a cloud service deployment method of a cloud platform. FIG. 2 is a schematic flowchart of a cloud service deployment method of a cloud platform according to an embodiment of this application. As shown in FIG. 2, the method includes the following steps.

201: The cloud platform provides a service feature setting interface, where the service feature setting interface is configured to obtain a supply-dependency relationship of different tenants.

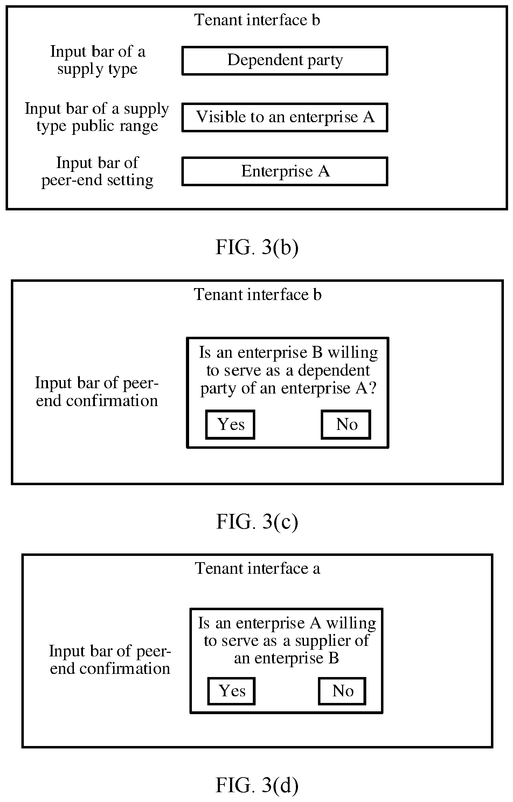

After the cloud platform is started, the service feature setting interface may be provided, where the service feature setting interface is configured to obtain the supply-dependency relationship of different tenants. Specifically, the service feature setting interface may be a tenant interface, or may be an application programming interface (application programming interface, API), or may be a template upload interface, or the like. For ease of description, the following uses an example in which the service feature setting interface is the tenant interface for description. As shown in FIG. 3(a) to FIG. 3(d) (where FIG. 3(a) is a schematic diagram of a service feature setting interface according to an embodiment of this application, FIG. 3(b) is another schematic diagram of a service feature setting interface according to an embodiment of this application, FIG. 3(c) is another schematic diagram of a service feature setting interface according to an embodiment of this application, and FIG. 3(d) is another schematic diagram of a service feature setting interface according to an embodiment of this application), a cloud platform may provide a tenant interface for a plurality of tenants, where the tenant interface includes a plurality of input boxes, and different input boxes are used to obtain different tenant information. For ease of description, the following uses two tenants having a service dependency relationship as an example to describe each input box in detail. A tenant serving as a supplier is referred to as a first tenant, and a tenant serving as a dependent party is referred to as a second tenant. The input box of the tenant interface includes:
(1) Input box of a supply type: The tenant may input a supply type of the tenant in the input box of the supply type of the tenant interface provided by the cloud platform. The supply type herein generally refers to the supplier or the dependent party. In this case, the cloud platform may classify, based on supply types of the plurality of tenants, the plurality of tenants into two types: the tenant serving as the supplier and the tenant serving as the dependent party. Specifically, an input box of a supply type of a tenant interface provided for the first tenant may be used to obtain a supply type of the first tenant, and an input box of a supply type of a tenant interface provided for the second tenant may be used to obtain a supply type of the second tenant, where the supply type of the first tenant is the supplier, and the supply type of the second tenant is the dependent party. For example, it is assumed that a service provided by an enterprise A for the outside is a database, and a service provided by an enterprise B for the outside is a video application dependent on the database of the enterprise A. In this case, a supply-dependency relationship exists between the enterprise A and the enterprise B. In this relationship, the enterprise A serves as the supplier, and the enterprise B serves as the dependent party. As shown in FIG. 3(a), when registering information on a tenant interface a provided by the cloud platform, the enterprise A may input a supply type of the enterprise A as the supplier in the input box of the supply type, to enable the cloud platform to determine that the enterprise A serves as the supplier. Similarly, as shown in FIG. 3(b), when registering information on a tenant interface b provided by the cloud platform, the enterprise B may input a supply type of the enterprise B as the dependent party in the input box of the supply type, to enable the cloud platform to determine that the enterprise B serves as the dependent party.
(2) Input box of a supply type public range: The input box of the supply type public range may be used to obtain the public range of the supply type of the tenant. The tenant may input a supply type public range of the tenant in the input box of the supply type public range of the tenant interface provided by the cloud platform. If the public range is visible to all external tenants, the cloud platform sets the supply type of the tenant to be visible to all external tenants. If the public range is visible to a specific tenant, the cloud platform sets the supply type of the tenant to be visible to some external tenants (for example, an external tenant specified by the tenant). Specifically, an input box of a supply type public range of the tenant interface provided for the first tenant may be used to obtain a supply type public range of the first tenant, and an input box of a supply type public range of the tenant interface provided for the second tenant may be used to obtain a supply type public range of the second tenant. The supply type public range of the first tenant is visible to all external tenants or visible to the second tenant, and the supply type public range of the second tenant is visible to all external tenants or visible to the first tenant. Still in the foregoing example, as shown in FIG. 3(a), when registering the information on the tenant interface a provided by the cloud platform, the enterprise A may further input the supply type public range of the enterprise A visible to the enterprise B in the input box of the supply type public range. Similarly, as shown in FIG. 3(b), when registering the information on the tenant interface b provided by the cloud platform, the enterprise B may further input the supply type public range of the enterprise B visible to the enterprise A in the input box of the supply type public range. In this case, the enterprise A may query the supply type of the enterprise B on the cloud platform, and the enterprise B may also query the supply type of the enterprise B on the cloud platform, while another enterprise cannot query the supply type of the enterprise A or the enterprise B.
(3) Input box of peer-end setting: The input box of the peer-end setting may be used to obtain a peer-end tenant that is set (or referred to as specified) by the tenant and that has the supply-dependency relationship. For a tenant serving as the supplier (or the dependent party), the tenant may input, in the input box of the peer-end setting of the tenant interface provided by the cloud platform, a peer-end tenant that is set by the tenant to serve as the dependent party (or the supplier), to enable the cloud platform to determine that the supply-dependency relationship exists between the tenant and the peer-end tenant set by the tenant. Specifically, an input box of peer-end setting of the tenant interface provided for the first tenant may be used to obtain a dependent party set by the first tenant, and an input box of peer-end setting of the tenant interface provided for the second tenant may be used to obtain a supplier set by the second tenant. The dependent party set by the first tenant is the second tenant, and the supplier set by the second tenant is the first tenant. Still in the foregoing example, as shown in FIG. 3(a), when registering the information on the tenant interface a provided by the cloud platform, the enterprise A may further input the enterprise B (where it is equivalent to that the enterprise A sets the enterprise B as the dependent party of the enterprise A) in the input box of the peer-end setting. Therefore, the cloud platform may determine that the supply-dependency relationship exists between the enterprise A and the enterprise B, in other words, determine the enterprise B as the dependent party of the enterprise A. Further, as shown in FIG. 3(b), when registering the information on the tenant interface b provided by the cloud platform, the enterprise B may also input the enterprise A in the input box of the peer-end setting. Therefore, the cloud platform may determine that the supply-dependency relationship exists between the enterprise A and the enterprise B, in other words, determine the enterprise A as the supplier of enterprise B. It should be understood that the enterprise A sets the enterprise B as the dependent party of the enterprise A, and the enterprise B sets the enterprise A as the supplier of the enterprise B. Both may be performed or one of the cases may be selected to be performed. This is not limited herein.
(4) Input box of peer-end confirmation: The input box of the peer-end confirmation may be used to obtain confirmation information of the peer-end tenant. For a tenant serving as the supplier (or the dependent party), after the tenant sets a peer-end tenant serving as the dependent party (or the supplier), the cloud platform may display to-be-confirmed information to the peer-end tenant in the input box of the peer-end confirmation of the tenant interface. The confirmation information is used to confirm with the peer-end tenant whether the peer-end tenant is willing to serve as the dependent party (or the supplier) of the tenant. After the cloud platform receives the confirmation information of the peer-end tenant in the input box of the peer-end confirmation, if the confirmation information indicates that the peer-end tenant is willing to serve as the dependent party (or the supplier) of the tenant, it is equivalent to successfully obtaining the supply-dependency relationship between the tenant and the peer-end tenant. Specifically, an input box of peer-end confirmation of the tenant interface provided for the first tenant may be used to: when obtaining that the dependent party set by the first tenant is the second tenant, confirm with the second tenant whether the second tenant is willing to serve as the dependent party of the first tenant. An input box of peer-end confirmation of the tenant interface provided for the second tenant may be used to: when obtaining that the supplier set by the second tenant is the first tenant, confirm with the first tenant whether the first tenant is willing to serve as the supplier of the second tenant. For example, as shown in FIG. 3(c), if the enterprise A sets the enterprise B as the dependent party of the enterprise A, the cloud platform may display to-be-confirmed information in the input box of the peer-end confirmation of the tenant interface b oriented to the enterprise B, to determine whether the enterprise B is willing to serve as the dependent party of the enterprise A. If the enterprise B inputs, in the input box of the peer-end confirmation, the confirmation information indicating that the enterprise B is willing to serve as the dependent party of the enterprise A, the cloud platform successfully obtains the supply-dependency relationship between the enterprise A and the enterprise B. Further, as shown in FIG. 3(d), if the enterprise B sets the enterprise A as the supplier of the enterprise B, the cloud platform may display to-be-confirmed information in the input box of the peer-end confirmation of the tenant interface an oriented to the enterprise A, to determine whether the enterprise A is willing to serve as the supplier of the enterprise B. If the enterprise A inputs, in the input box of the peer-end confirmation, confirmation information indicating that the enterprise A is willing to serve as the supplier of the enterprise B, the cloud platform successfully obtains the supply-dependency relationship between the enterprise A and the enterprise B. It should be understood that the confirmation information of the enterprise A is obtained, and the confirmation information of the enterprise B is obtained. Both may be performed or one of the cases may be selected to be performed. This is not limited herein.

202: The cloud platform deploys, based on the supply-dependency relationship obtained by the service feature setting interface, the cloud service for the tenant serving as the dependent party or for the tenant serving as the supplier.

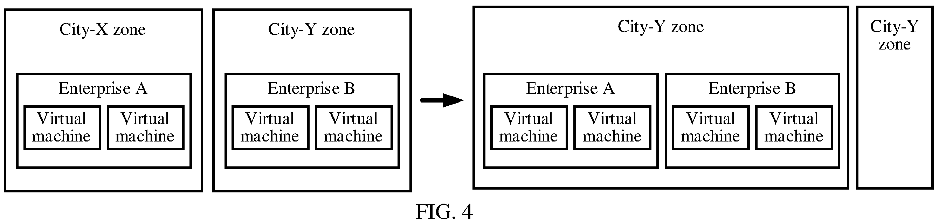

After obtaining the supply-dependency relationship of different tenants through the service feature setting interface, the cloud platform may deploy, based on the supply-dependency relationship, the cloud service for the tenant serving as the dependent party or for the tenant serving as the supplier. That the cloud platform deploys the cloud service may be classified into two cases: (1) The cloud service of the tenant serving as the dependent party is deployed along with the cloud service of the tenant serving as the supplier. (2) The cloud service of the tenant serving as the supplier is deployed along with the cloud service of the tenant serving as the dependent party. The following describes the two cases.
(1) For the tenant serving as the dependent party and the tenant serving as the supplier in any supply-dependency relationship, the cloud platform may first determine an availability zone at which the cloud service of the tenant serving as the supplier is located, and set the cloud service of the tenant serving as the dependent party in the availability zone. In this way, cross-tenant cloud service affinity deployment is implemented. Still in the foregoing example, as shown in FIG. 4 (FIG. 4 is a schematic diagram of deploying a cloud service by a cloud platform according to an embodiment of this application), it is assumed that the enterprise A is located in a city-X zone. The enterprise A may apply to the cloud platform to deploy, in the city-X zone, a virtual machine that runs a database. After the cloud platform deploys, in the city-X zone, the virtual machine that is used to run the database of the enterprise A, because there is the supply-dependency relationship between the enterprise A and the enterprise B, the cloud platform may also deploy, in the city-X zone, a virtual machine that is used to run a video application of the enterprise B, and release a virtual machine that has been deployed in a city-Y zone and that is used to run the video application of the enterprise B.

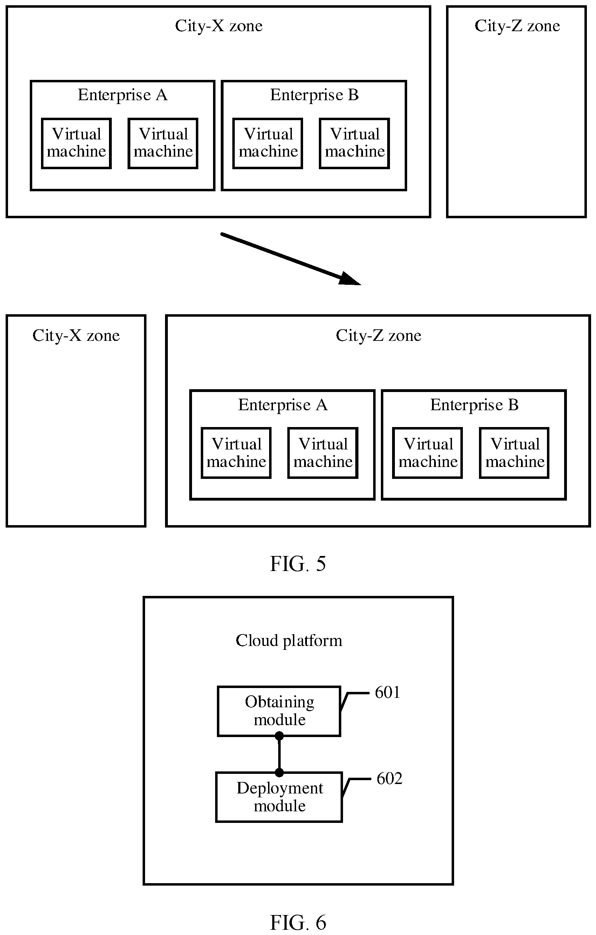

For another example, as shown in FIG. 5 (FIG. 5 is another schematic diagram of deploying a cloud service by a cloud platform according to an embodiment of this application), it is assumed that the enterprise A is located in the city-X zone. Due to some factors (such as a price of the virtual machine), the enterprise A applies to the cloud platform to migrate, from the city X to the city Z, the virtual machine that runs the database. After the cloud platform deploys, in the city-Z zone, the virtual machine that is used to run the database of the enterprise A, because there is the supply-dependency relationship between the enterprise A and the enterprise B, the cloud platform may also deploy, in the city-Z zone, the virtual machine that is used to run the video application of the enterprise B, and release the virtual machine that has been deployed in the city-X zone and that is used to run the database of the enterprise A and the virtual machine that has been deployed and that is used to run the video application of the enterprise B.

Further, the cloud platform sets an auto scaling policy of the cloud service for the tenant serving as the supplier. The auto scaling policy may be specifically: For the tenant serving as the dependent party and the tenant serving as the supplier in any supply-dependency relationship, after a quantity of cloud instances of the tenant serving as the supplier changes, a quantity of cloud instances of the tenant serving as the dependent party also changes. Therefore, the cloud platform may adjust, according to the auto scaling policy, the cloud service of the tenant serving as the supplier. Still in the foregoing example, the enterprise A may apply to the cloud platform to increase, in the city-X zone, a quantity of virtual machines that run the database. In this case, after receiving a request of the enterprise A, the cloud platform may increase, in the city-X zone, the quantity of virtual machines that are used to run the database of the enterprise A and the quantity of virtual machines that are used to run the video application of the enterprise B.

Further, the cloud platform may monitor, in real time, a status parameter of the cloud service of the tenant serving as the supplier. The status parameter may be quality of service (quality of service, QoS) or a throughput. The cloud platform may adjust, based on the status parameter of the cloud service of the tenant serving as the supplier, the cloud service of the tenant serving as the supplier. Still in the foregoing example, the cloud platform may monitor, in real time, QoS of the virtual machine that is used to run the database of the enterprise A. If it is determined that the QoS is less than or equal to a preset QoS threshold, the quantity of virtual machines that are used to run the video application of the enterprise B are increased.

(2) For the tenant serving as the dependent party and the tenant serving as the supplier in any supply-dependency relationship, the cloud platform may first determine the availability zone at which the cloud service of the tenant serving as the supplier is located, and set the cloud service of the tenant serving as the dependent party in the availability zone. In this way, cross-tenant cloud service affinity deployment is implemented.

Further, the cloud platform sets the auto scaling policy of the cloud service for the tenant serving as the supplier. The auto scaling policy may be specifically: For the tenant serving as the dependent party and the tenant serving as the supplier in any supply-dependency relationship, after a quantity of cloud instances of the tenant serving as the supplier changes, a quantity of cloud instances of the tenant serving as the dependent party also changes. Therefore, the cloud platform may adjust, according to the auto scaling policy, the cloud service of the tenant serving as the supplier.

Further, the cloud platform may monitor, in real time, a status parameter of the cloud service of the tenant serving as the supplier. The status parameter may be the quality of service (quality of service, QoS) or the throughput. The cloud platform may adjust, based on the status parameter of the cloud service of the tenant serving as the supplier, the cloud service of the tenant serving as the supplier.

It should be understood for deploying the cloud service of the tenant serving as the supplier along with the cloud service of the tenant serving as the dependent party, refer to a related description part of deploying the cloud service of the tenant serving as the dependent party along with the cloud service of the tenant serving as the supplier. Details are not described herein again.

It should be further understood that the examples in which the logical region is the availability zone shown in FIG. 4 and FIG. 5 are used merely for schematic description, and do not constitute a limitation on a type of the logical region in this embodiment. The logical region may alternatively be a region, a data center, or the like.

In embodiment of this application, the cloud platform may provide the service feature setting interface, where the service feature setting interface is configured to obtain the supply-dependency relationship of different tenants. The cloud platform deploys, based on the supply-dependency relationship obtained by the service feature setting interface, the cloud service for the tenant serving as the dependent party or for the tenant serving as the supplier. It can be learned that when deploying the cloud service for a tenant, the cloud platform may obtain a supply-dependency relationship of the tenant through the service feature setting interface. Because the relationship indicates an association relationship between the tenant and another tenant, when the cloud platform deploys the cloud service for the tenant based on the relationship, if the tenant serves as the dependent party, the cloud platform may consider impact brought by the another tenant serving as the supplier, and if the tenant serves as the supplier, the cloud platform may consider impact brought by the another tenant serving as the dependent party, to implement cross-tenant cloud service optimization deployment.

Further, for the tenant serving as the dependent party and the tenant serving as the supplier in any supply-dependency relationship, the cloud platform may set the cloud service of the tenant serving as the supplier and the cloud service of the tenant serving as the dependent party in a same logical region, to implement cross-tenant cloud service affinity deployment. In this way, when the cloud service of the tenant serving as the supplier interacts with the cloud service of the tenant serving as the dependent party, data does not need to be transmitted across a logical region. This can reduce a data transmission delay and improve data transmission efficiency.

Specifically, the cross tenant cloud services can be collaboratively deployed in a same logical region. Therefore, the following advantages can be achieved: (1) A communication delay between cloud services can be reduced, achieving better experience. (2) Data transmission across an aggregation layer can be reduced. Therefore, transmission bandwidth can be guaranteed. This helps improve quality of service of big data supply and big data consumption, and optimize cooperation between a video production service product and a video processing service product. (3) A large amount of traffic can be prevented from crossing an aggregation boundary, and excessive wasted network bandwidth can be avoided, to improve network resource utilization.

The foregoing describes in detail the cloud service deployment method of the cloud platform provided in embodiments of this application. The following describes the cloud platform provided in embodiments of this application. FIG. 6 is a schematic diagram of a structure of a cloud platform according to an embodiment of this application. As shown in FIG. 6, the cloud platform includes:
an obtaining module 601, configured to provide a service feature setting interface, where the service feature setting interface is configured to obtain a supply-dependency relationship of different tenants, for example, the obtaining module 601 is configured to implement step 201 in the embodiment shown in FIG. 2; and
a deployment module 602, configured to deploy, based on the supply-dependency relationship obtained by the service feature setting interface, a cloud service for a tenant serving as a dependent party or for a tenant serving as a supplier, where for example, the deployment module 602 is configured to implement step 202 in the embodiment shown in FIG. 2.

In a possible implementation, the obtaining module 601 is configured to: obtain, through the service feature setting interface, a supply type of a first tenant, and obtain a supply type of a second tenant, where the supply type of the first tenant is the supplier, and the supply type of the second tenant is the dependent party.

In a possible implementation, the obtaining module 601 is further configured to: obtain, through the service feature setting interface, a supply type public range of the first tenant, and obtain a supply type public range of the second tenant, where the supply type public range of the first tenant is visible to all external tenants or visible to the second tenant, and the supply type public range of the second tenant is visible to all external tenants or visible to the first tenant.

In a possible implementation, the obtaining module 601 is further configured to: obtain, through the service feature setting interface, a dependent party set by the first tenant, or obtain a supplier set by the second tenant, where the dependent party set by the first tenant is the second tenant, and the supplier set by the second tenant is the first tenant.

In a possible implementation, the obtaining module 601 is further configured to: when obtaining, through the service feature setting interface, that the dependent party set by the first tenant is the second tenant, confirm with the second tenant whether the second tenant is willing to serve as the dependent party of the first tenant, and when obtaining that the supplier set by the second tenant is the first tenant, confirm with the first tenant whether the first tenant is willing to serve as the supplier of the second tenant.

In a possible implementation, the deployment module 602 is configured to: determine an availability zone at which the cloud service of the tenant serving as the supplier is located; and set the cloud service of the tenant serving as the dependent party in the availability zone.

In a possible implementation, the deployment module 602 is configured to: determine an auto scaling policy of the cloud service of the tenant serving as the supplier; and adjust, according to the auto scaling policy, the cloud service of the tenant serving as the dependent party.

In a possible implementation, the deployment module 602 is configured to: determine QoS or a throughput of the cloud service of the tenant serving as the supplier; and adjust, based on the QoS or the throughput, the cloud service of the tenant serving as the dependent party.

In a possible implementation, the deployment module 602 is configured to: determine an availability zone at which the cloud service of the tenant serving as the dependent party is located; and set the cloud service of the tenant serving as the supplier in the availability zone.

In a possible implementation, the deployment module 602 is configured to: determine an auto scaling policy of the cloud service of the tenant serving as the dependent party; and adjust, according to the auto scaling policy, the cloud service of the tenant serving as the supplier.

In a possible implementation, the deployment module 602 is configured to: determine QoS or a throughput of the cloud service of the tenant serving as the dependent party; and adjust, based on the QoS or the throughput, the cloud service of the tenant serving as the supplier.

It should be noted that content such as information exchange and an execution process between the modules/units of the apparatus is based on a same concept as that in the method embodiments of this application, and brought technical effects are the same as those in the method embodiments of this application. For specific content, refer to descriptions in the foregoing method embodiments in embodiments of this application. Details are not described herein again.

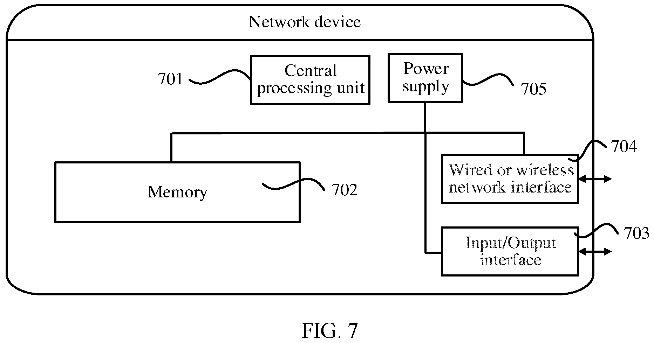

FIG. 7 is a schematic diagram of a structure of a network device according to an embodiment of this application. As shown in FIG. 7, an embodiment of a network device in embodiments of this application may include one or more central processing units 701, a memory 702, an input/output interface 703, a wired or wireless network interface 704, and a power supply 705.

The memory 702 may be transient storage or persistent storage. Further, the central processing unit 701 may be configured to: communicate with the memory 702, and perform a series of instruction operations in the memory 702 on the network device.

In this embodiment, the central processing unit 701 may perform an operation performed by the cloud platform in the embodiment shown in FIG. 2. Details are not described herein again.

In this embodiment, division of specific functional modules in the central processing unit 701 may be similar to division of modules such as the obtaining module and the deployment module described in FIG. 6. Details are not described herein again.

An embodiment of this application further relates to a computer storage medium, including computer-readable instructions, and when the computer-readable instructions are executed, the method shown in FIG. 2 is implemented.

An embodiment of this application further relates to a computer program product including instructions. When the computer program product runs on a computer, the computer is enabled to perform the method shown in FIG. 2.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate parts may or may not be physically separate, and the parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, an optical disc, or the like.

## Claims

1. A cloud service deployment method of a cloud platform, comprising:
providing a service feature setting interface, wherein the service feature setting interface is configured to obtain a supply-dependency relationship of different tenants; and
deploying, based on the supply-dependency relationship obtained by the service feature setting interface, a cloud service for a tenant serving as a dependent party or for a tenant serving as a supplier.

2. The method according to claim 1, wherein the service feature setting interface is configured to: obtain a supply type of a first tenant, and obtain a supply type of a second tenant, wherein the supply type of the first tenant is the supplier, and the supply type of the second tenant is the dependent party.

3. The method according to claim 2, wherein the service feature setting interface is further configured to: obtain a supply type public range of the first tenant, and obtain a supply type public range of the second tenant, wherein the supply type public range of the first tenant is visible to all external tenants or visible to the second tenant, and the supply type public range of the second tenant is visible to all external tenants or visible to the first tenant.

4. The method according to claim 2 or 3, wherein the service feature setting interface is further configured to: obtain a dependent party set by the first tenant, or obtain a supplier set by the second tenant, wherein the dependent party set by the first tenant is the second tenant, and the supplier set by the second tenant is the first tenant.

5. The method according to claim 4, wherein the service feature setting interface is further configured to: when obtaining that the dependent party set by the first tenant is the second tenant, confirm with the second tenant whether the second tenant is willing to serve as the dependent party of the first tenant, and when obtaining that the supplier set by the second tenant is the first tenant, confirm with the first tenant whether the first tenant is willing to serve as the supplier of the second tenant.

6. The method according to any one of claims 1 to 5, wherein the deploying, based on the supply-dependency relationship obtained by the service feature setting interface, a cloud service for a tenant serving as a dependent party comprises:
determining an availability zone at which the cloud service of the tenant serving as the supplier is located; and
setting the cloud service of the tenant serving as the dependent party in the availability zone.

7. The method according to any one of claims 1 to 5, wherein the deploying, based on the supply-dependency relationship obtained by the service feature setting interface, a cloud service for a tenant serving as a dependent party comprises:
determining an auto scaling policy of the cloud service of the tenant serving as the supplier; and
adjusting, according to the auto scaling policy, the cloud service of the tenant serving as the dependent party.

8. The method according to any one of claims 1 to 5, wherein the deploying, based on the supply-dependency relationship obtained by the service feature setting interface, a cloud service for a tenant serving as a dependent party comprises:
determining quality of service QoS or a throughput of the cloud service of the tenant serving as the supplier; and
adjusting, based on the QoS or the throughput, the cloud service of the tenant serving as the dependent party.

9. The method according to any one of claims 1 to 5, wherein the deploying, based on the supply-dependency relationship obtained by the service feature setting interface, a cloud service for a tenant serving as a supplier comprises:
determining an availability zone at which the cloud service of the tenant serving as the dependent party is located; and
setting the cloud service of the tenant serving as the supplier in the availability zone.

10. The method according to any one of claims 1 to 5, wherein the deploying, based on the supply-dependency relationship obtained by the service feature setting interface, a cloud service for a tenant serving as a supplier comprises:
determining an auto scaling policy of the cloud service of the tenant serving as the dependent party; and
adjusting, according to the auto scaling policy, the cloud service of the tenant serving as the supplier.

11. The method according to any one of claims 1 to 5, wherein the deploying, based on the supply-dependency relationship obtained by the service feature setting interface, a cloud service for a tenant serving as a supplier comprises:
determining QoS or a throughput of the cloud service of the tenant serving as the dependent party; and
adjusting, based on the QoS or the throughput, the cloud service of the tenant serving as the supplier.

12. A cloud platform, comprising:
an obtaining module, configured to provide a service feature setting interface, wherein the service feature setting interface is configured to obtain a supply-dependency relationship of different tenants; and
a deployment module, configured to deploy, based on the supply-dependency relationship obtained by the service feature setting interface, a cloud service for a tenant serving as a dependent party or for a tenant serving as a supplier.

13. The cloud platform according to claim 12, wherein the obtaining module is configured to: obtain, through the service feature setting interface, a supply type of a first tenant, and obtain a supply type of a second tenant, wherein the supply type of the first tenant is the supplier, and the supply type of the second tenant is the dependent party.

14. The cloud platform according to claim 13, wherein the obtaining module is further configured to: obtain, through the service feature setting interface, a supply type public range of the first tenant, and obtain a supply type public range of the second tenant, wherein the supply type public range of the first tenant is visible to all external tenants or visible to the second tenant, and the supply type public range of the second tenant is visible to all external tenants or visible to the first tenant.

15. The cloud platform according to claim 13 or 14, wherein the obtaining module is further configured to: obtain, through the service feature setting interface, a dependent party set by the first tenant, or obtain a supplier set by the second tenant, wherein the dependent party set by the first tenant is the second tenant, and the supplier set by the second tenant is the first tenant.

16. The cloud platform according to claim 15, wherein the obtaining module is further configured to: when obtaining, through the service feature setting interface, that the dependent party set by the first tenant is the second tenant, confirm with the second tenant whether the second tenant is willing to serve as the dependent party of the first tenant, and when obtaining that the supplier set by the second tenant is the first tenant, confirm with the first tenant whether the first tenant is willing to serve as the supplier of the second tenant.

17. The cloud platform according to any one of claims 12 to 16, wherein the deployment module is configured to:
determine an availability zone at which the cloud service of the tenant serving as the supplier is located; and
set the cloud service of the tenant serving as the dependent party in the availability zone.

18. The cloud platform according to any one of claims 12 to 16, wherein the deployment module is configured to:
determine an auto scaling policy of the cloud service of the tenant serving as the supplier; and
adjust, according to the auto scaling policy, the cloud service of the tenant serving as the dependent party.

19. The cloud platform according to any one of claims 12 to 16, wherein the deployment module is configured to:
determine QoS or a throughput of the cloud service of the tenant serving as the supplier; and
adjust, based on the QoS or the throughput, the cloud service of the tenant serving as the dependent party.

20. The cloud platform according to any one of claims 12 to 16, wherein the deployment module is configured to:
determine an availability zone at which the cloud service of the tenant serving as the dependent party is located; and
set the cloud service of the tenant serving as the supplier in the availability zone.

21. The cloud platform according to any one of claims 12 to 16, wherein the deployment module is configured to:
determine an auto scaling policy of the cloud service of the tenant serving as the dependent party; and
adjust, according to the auto scaling policy, the cloud service of the tenant serving as the supplier.

22. The cloud platform according to any one of claims 12 to 16, wherein the deployment module is configured to:
determine QoS or a throughput of the cloud service of the tenant serving as the dependent party; and
adjust, based on the QoS or the throughput, the cloud service of the tenant serving as the supplier.

23. A network device, wherein the network device comprises a memory and a processor, wherein
the memory stores code, the processor is configured to execute the code, and when the code is executed, the network device performs the method according to any one of claims 1 to 11.

24. A computer storage medium, wherein the computer storage medium stores a computer program, and when the program is executed by a computer, the computer is enabled to perform the method according to any one of claims 1 to 11.

25. A computer program product, wherein the computer program product stores instructions, and when the instructions are executed by a computer, the computer is enabled to perform the method according to any one of claims 1 to 11.
